# EUROPEAN PATENT SPECIFICATION

(11) **EP 3 578 358 B1**
(45) Date of publication and mention of the grant of the patent: **08.07.2020**
(21) Application number: 18186306.9
(22) Date of filing: 30.07.2018
(51) Int. Cl.: B32B 5/18, B32B 5/24, B32B 27/06, B32B 27/12, B32B 27/32

(54) **COMPOSITE FILM AND TEXTILE PRODUCT COMPRISING THE SAME**
VERBUNDSTOFFFOLIE UND TEXTILPRODUKT DAMIT
FILM COMPOSITE ET PRODUIT TEXTILE LE COMPRENANT

(30) Priority: 08.06.2018 TW 107119920
(43) Date of publication of application: 11.12.2019
(73) Proprietor: YIE-CHENG TEXTILE TECHNOLOGY CO., LTD, Taoyuan City 330 (TW)
(72) Inventor: CHANG, Chih-Yu, 330 Taoyuan City (TW)
(74) Representative: Zimmermann, Tankred Klaus

(56) References cited:
- CN-A- 107 263 992
- GB-A- 1 384 276
- US-A1- 2013 291 293

## Description

### BACKGROUND

### Technology Field

The present disclosure relates to a film material and, in particular, to a composite film and a textile product comprising the same.

### Description of Related Art

As the progress of technology, the textile materials have been developed from the simple knitted fabrics and woven fabrics to the functional fabrics and environmentally friendly fibers, and these developments create the transformation of the traditional textile industry. With the rapid development of high-tech research and development, the improvement of quality and versatility of textile products has become an important issue for technical personnel in this art while developing textile products.

In the current textile products, especially functional clothing (such as windbreakers, sports jackets, etc.) and functional shoes (such as hiking shoes), the "waterproof' and "air permeability" are important evaluation criteria for consumers to purchase. "Waterproof" means that the fabric has the ability to resist the penetration of moisture from the external environment to the internal environment (such as the skin). Usually, the surface of the fabric is coated with polytetrafluoroethylene (PTFE) or is made of a layer of polytetrafluoroethylene film.

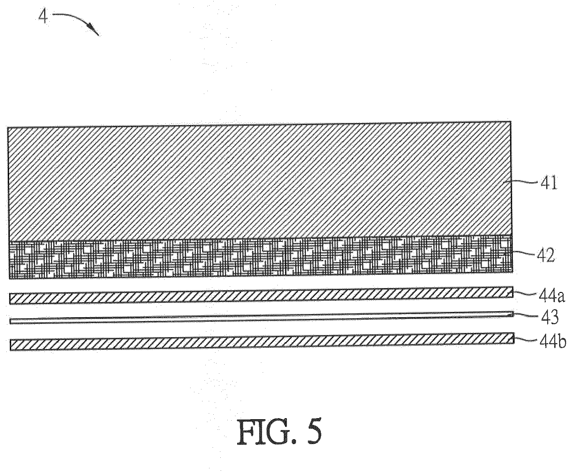

FIG. 5 is a schematic diagram of a conventional functional fabric. Referring to FIG. 5, the functional fabric 4 includes a surface cloth 41, a middle layer cloth 42, a first mesh layer 44a, a waterproof film layer 43, and a second mesh layer 44b in the order from the upper side (outer side) to the lower side (inner side). The surface cloth 41 and the middle layer cloth 42 belong to the outer layer cloth structure, and the first mesh layer 44a, the waterproof film layer 43 and the second mesh layer 44b belong to the inner layer waterproof fabric structure. In addition, the surface cloth 41 can be subjected to water repellent treatment to enhance the overall waterproof effect. The waterproof film layer 43 is the aforementioned polytetrafluoroethylene film. The middle layer cloth 42 is a fabric made of foam material. The first mesh layer 44a and the second mesh layer 44b covering the waterproof film layer 43 are disposed to prevent breakage due to friction between the waterproof film layer 43 and the intermediate cloth 42 and/or the human body. However, since the functional fabric 4 has a multi-layer structure and is complicated in design, the manufacturing process is cumbersome and the cost is also increased. Furthermore, since the waterproof film layer 43 of the functional cloth 4 is made of a polytetrafluoroethylene material, if it is subjected to pulling or a large stress, it is likely to be permanently deformed or even broken. If it is used as a three-dimensionally bent garment (for example, a shoe), the waterproof film layer 43 in the bent portion of the garment is subjected to a greater stress than the flat portion, so that it is less suitable for directly sewing with a single piece. It usually needs to be processed in a plurality of pieces or in a shoe cover or a sock cover to make the clothes or shoes. However, in the case of forming a shoe cover or a sock cover by splicing a plurality of pieces, it is necessary to additionally consider the waterproof treatment at the splicing seam to maintain the overall waterproofness of the garment. The general technical background of the invention also includes CN 107 263 992 A and US 2013/291293 A1.

### SUMMARY

An objective of the present disclosure is to provide a composite film and a textile product comprising the same. Compared with the conventional art, the composite film of the present disclosure still has a good elasticity, tensile strength and impact resistance while maintaining good air permeability and waterproofness. The composite film and the textile product are particularly suitable for being used as a shoe body or a clothing material for integral sewing, thereby saving the steps and materials required in the manufacturing process, reducing the manufacturing cost and the required energy, and complying with environmental protection and economic benefits.

To achieve the above objective, the present disclosure provides a composite film as defined in claim 1.

In addition, the present disclosure also provides a textile product comprising a composite film and a first textile fabric layer, as defined in claim 6.

In one embodiment, a tensile strength of the composite film ranges from 1.3 kg/inch to 2.0 kg/inch.

In one embodiment, an air permeability of the composite film ranges from 0.244 ft³/min/ft² to 0.283 ft³/min/ft².

In one embodiment, a tearing strength of the composite film ranges from 2.8 kgf to 3.1 kgf.

In one embodiment, the polyurethane elastic layer is directly attached to the polytetrafluoroethylene film layer.

In one embodiment, the textile product further comprises a second textile fabric layer. When the first textile fabric layer is attached to the polytetrafluoroethylene film layer of the composite film, the second textile fabric layer is attached to the polyurethane elastic layer of the composite film. When the first textile fabric layer is attached to the polyurethane elastic layer of the composite film, the second textile fabric layer is attached to the polytetrafluoroethylene film layer of the composite film.

As mentioned above, since the composite film of this disclosure comprises a polytetrafluoroethylene film layer with high waterproofness and a polyurethane elastic layer with elastic property and high air permeability, and the polytetrafluoroethylene film layer is directly attached to the polyurethane elastic layer. Accordingly, the composite film of this disclosure can have good air permeability and waterproofness and still have a good elasticity and tensile strength. The composite film and the textile product are particularly suitable for being used as a shoe body or a clothing material for integral sewing, thereby saving the steps and materials required in the manufacturing process, reducing the manufacturing cost and the required energy, and complying with environmental protection and economic benefits.

### BRIEF DESCRIPTION OF THE DRAWINGS

The disclosure will become more fully understood from the detailed description and accompanying drawings, which are given for illustration only, and thus are not limitative of the present disclosure, and wherein:
FIG. 1 is a schematic diagram showing a composite film according to a first embodiment of this disclosure;
FIG. 2A is a schematic diagram showing a textile product according to a second embodiment of this disclosure;
FIG. 2B is a schematic diagram showing another textile product according to the second embodiment of this disclosure;
FIG. 2C is a schematic diagram showing still another textile product according to the second embodiment of this disclosure;
FIG. 3A is a schematic diagram showing a shoe body made of the textile product of FIG. 2A;
FIG. 3B is a sectional view of the shoe body made of the textile product as shown in FIG. 3A;
FIG. 3C is a partial enlarged view of a region B of the shoe body made of the textile product as shown in FIG. 3B;
FIG. 4A is a schematic diagram showing an SEM photo taking from the polyurethane elastic layer of the composite film according to the first embodiment of this disclosure;
FIG. 4B is a schematic diagram showing an SEM photo taking from the polytetrafluoroethylene film layer of the composite film according to the first embodiment of this disclosure;
FIG. 4C is a schematic diagram showing an SEM photo of a cross-section of the composite film according to the first embodiment of this disclosure; and
FIG. 5 is a schematic diagram showing a conventional functional fabric.

### DETAILED DESCRIPTION OF THE DISCLOSURE

The present disclosure will be apparent from the following detailed description, which proceeds with reference to the accompanying drawings, wherein the same references relate to the same elements.

A composite film according to a first embodiment of this disclosure is provided, and the features and physical properties of the textile product of this disclosure will be described in the following embodiment and experimental example.

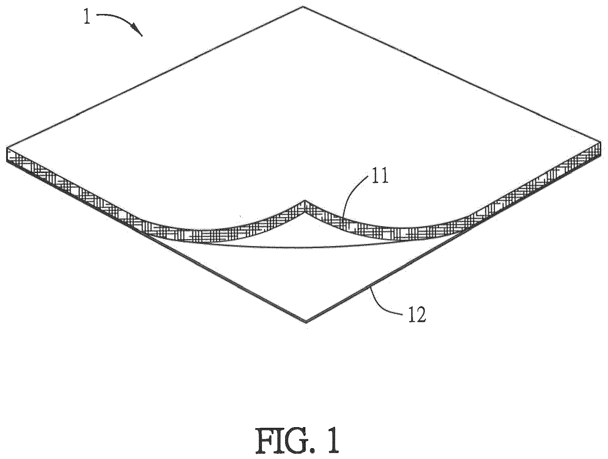

FIG. 1 is a schematic diagram showing a composite film 1 according to a first embodiment of this disclosure. The composite film 1 includes a polytetrafluoroethylene (PTFE) film layer 12 and a polyurethane elastic layer 11. The polyurethane elastic layer 11 is attached to the polytetrafluoroethylene film layer 12. The polyurethane elastic layer 11 is a layer structure, and has a thickness ranging from 0.3 mm to 1.2 mm. The material of the polyurethane elastic layer 11 is made of elastic foam material, which is mainly composed of polyurethane. Polyurethane refers to a polymer having a urethane as a characteristic unit in its molecular main chain. The polytetrafluoroethylene film layer 12 can be made in a manner as described in U.S. Patent No. 3,953,566, the disclosure of which is incorporated herein in its entirety by reference. The bonding of the polyurethane elastic layer 11 and the polytetrafluoroethylene film layer 12 can be carried out by coating reactive polyurethane (PUR) melt adhesives, which can be provided by point dispensing. This disclosure is not limited thereto.

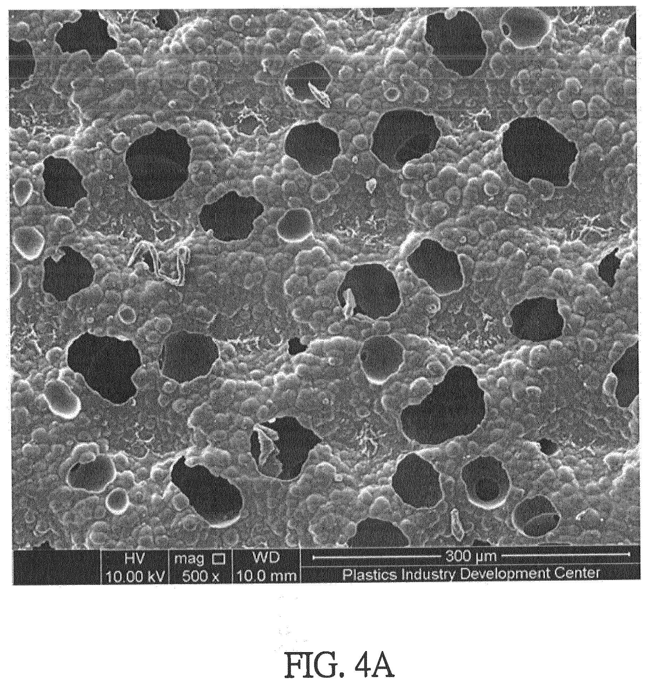

In this embodiment, the tensile strength of the composite film 1 ranges from 1.3 kg/inch to 2.0 kg/inch, and the tearing strength of the composite film ranges from 2.8 kgf to 3.1 kgf. FIG. 4A is a schematic diagram showing an SEM photo taking from the polyurethane elastic layer 11 of the composite film 1 according to the first embodiment of this disclosure. The polyurethane elastic layer 11 can be prepared by chemical foaming, so that a plurality of non-uniform micro pores can be formed inside the polyurethane elastic layer 11. The average size of micro pores is ranged within a micrometer level (1∼150 micrometers). The polyurethane elastic layer 11 cannot provide a good waterproof function, but the micro pores (micrometer level) can provide an excellent air permeability. Besides, the polyurethane elastic layer 11 has an elastic property and is thicker than the polytetrafluoroethylene film layer 12. Accordingly, the configuration of the polyurethane elastic layer 11 can provide the composite film 1 with a desired thick feeling and good elastic property and impact resistance.

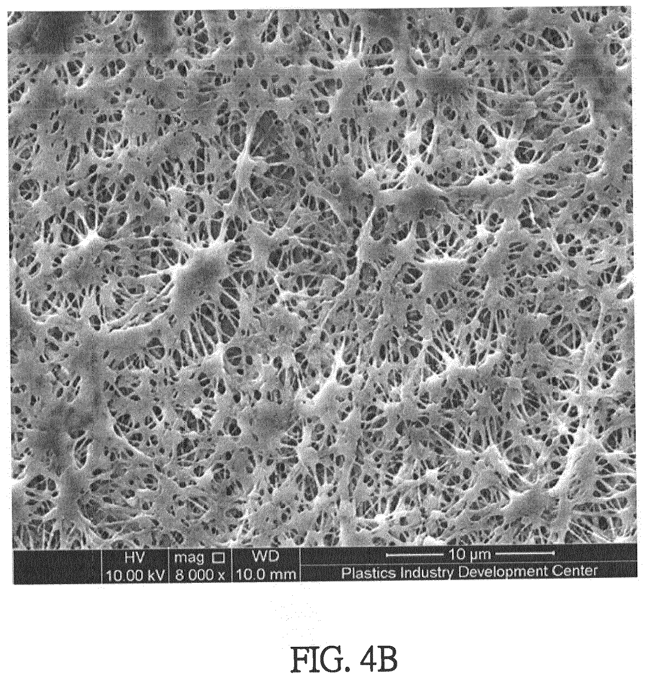

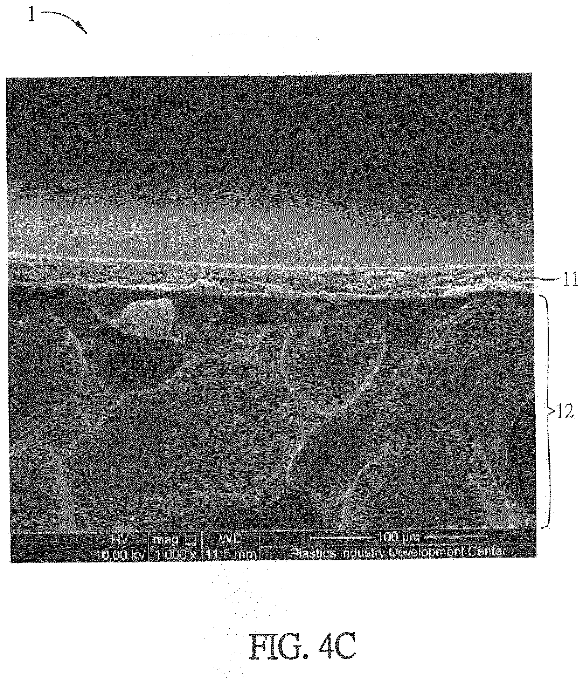

An average thickness of the polytetrafluoroethylene film layer 12 ranges from 0.01 mm to 0.035 mm, and a moisture permeability thereof ranges from 8,000 g/m²·24h to 14,000 g/m²·24h. FIG. 4B is a schematic diagram showing an SEM photo taking from the polytetrafluoroethylene film layer 12 of the composite film 1 according to the first embodiment of this disclosure. The polytetrafluoroethylene film layer 12 has a plurality of micro pores, and the average size of the micro pores is ranged within a nanometer level. FIG. 4C is a schematic diagram showing an SEM photo of a cross-section of the composite film 1 according to the first embodiment of this disclosure. In the composite film 1, the polyurethane elastic layer 11 is directly attached to the polytetrafluoroethylene film layer 12. The test results indicate that the moisture permeability of the composite film 1 also ranges from 8,000 g/m²·24h to 14,000 g/m²·24h. That is, attaching the polyurethane elastic layer 11 to the polytetrafluoroethylene film layer 12 does not obviously affect the moisture permeability of the composite film 1. In addition, since the average size of the micro pores of the polytetrafluoroethylene film layer 12 is ranged within a nanometer level, the composite film 1 can provide a good waterproofness and still have a proper air permeability.

Accordingly, since the polyurethane elastic layer 11 of the composite film 1 has a good elastic property and a high air permeability, the composite film 1 can have a good elasticity and tensile strength. In practice, since the polytetrafluoroethylene film layer 12 is directly attached or bonded to the polyurethane elastic layer 11, the polyurethane elastic layer 11 can provide a buffer for resisting the force applied to the final product made of the composite film 1 during the manufacturing process or the operation period. After the applied force disappeared, the polyurethane elastic layer 11 can provide an elastic force to recover the polytetrafluoroethylene film layer 12 to the original shape. This function can decrease the damage or break of the polytetrafluoroethylene film layer 12 caused by the applied force, thereby remaining the waterproofness of the composite film 1.

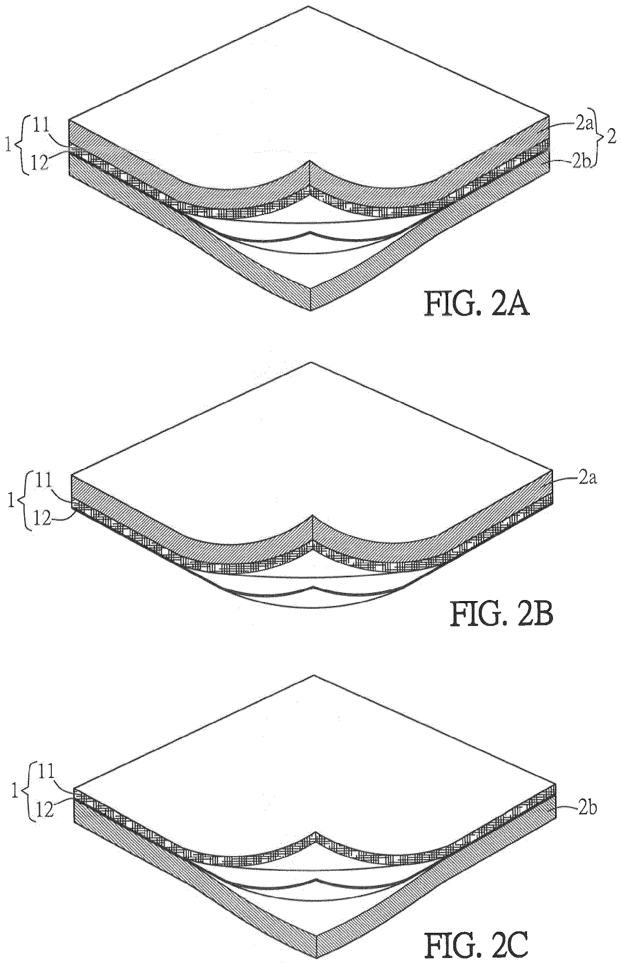

FIGS. 2A to 2C are schematic diagrams showing different textile products according to a second embodiment of this disclosure. As shown in FIG. 2A, the textile product of the second embodiment also includes a composite film 1 (as the first embodiment) and a textile fabric layer 2. The textile fabric layer 2 includes a first textile fabric layer 2a and a second textile fabric layer 2b. The composite film 1 includes a polytetrafluoroethylene (PTFE) film layer 12 and a polyurethane elastic layer 11. The polyurethane elastic layer 11 is attached to the polytetrafluoroethylene film layer 12. The polyurethane elastic layer 11 has a thickness ranging from 0.3 mm to 1.2 mm. The first textile fabric layer 2a is attached to the polyurethane elastic layer 11 of the composite film 1, the second textile fabric layer 2b is attached to the polytetrafluoroethylene film layer 12 of the composite film 1.

In some embodiments, as shown in FIGS. 2B and 2C, the textile fabric layer 2 may include either one of the first textile fabric layer 2a and the second textile fabric layer 2b. As shown in FIG. 2B, the textile fabric layer of the textile product only includes the first textile fabric layer 2a, and the first textile fabric layer 2a is attached to the polyurethane elastic layer 11 of the composite film 1. As shown in FIG. 2C, the textile fabric layer of the textile product only includes the second textile fabric layer 2b, and the second textile fabric layer 2b is attached to the polytetrafluoroethylene film layer 12 of the composite film 1. Since the first textile fabric layer 2a or the second textile fabric layer 2b is disposed at the outer side of the polyurethane elastic layer 11 or the polytetrafluoroethylene film layer 12 of the composite film 1, it can protect the composite film 1 so as to reduce the wore portion thereof. In addition, the configuration of the textile fabric layer 2 can improve the touch feeling of the composite textile product. Moreover, if the composite textile product is clothes or shoes, it is possible to design the patterns on the textile fabric layer 2 as desired, thereby making the clothes or shoes more pretty.

In this embodiment, the material of the textile fabric layer 2 can be determined based on the actual requirement, and it can be, for example, knitted fabric, plain weave fabric or non-woven fabric. This disclosure is not limited thereto. In addition, the composite film 1 and the textile fabric layer 2 can be attached to each other by gluing, stitching or fusing. Moreover, the textile fabric layer 2 can have an additional water repellent treatment, and the finished textile product still have the functions of waterproof, air permeability, and moisture permeability. This disclosure is not limited.

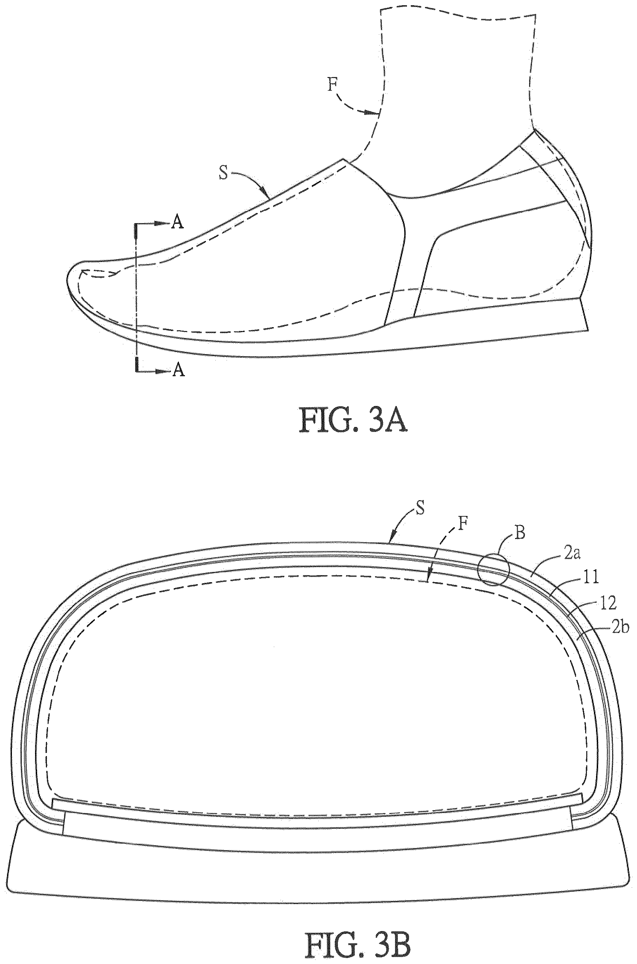

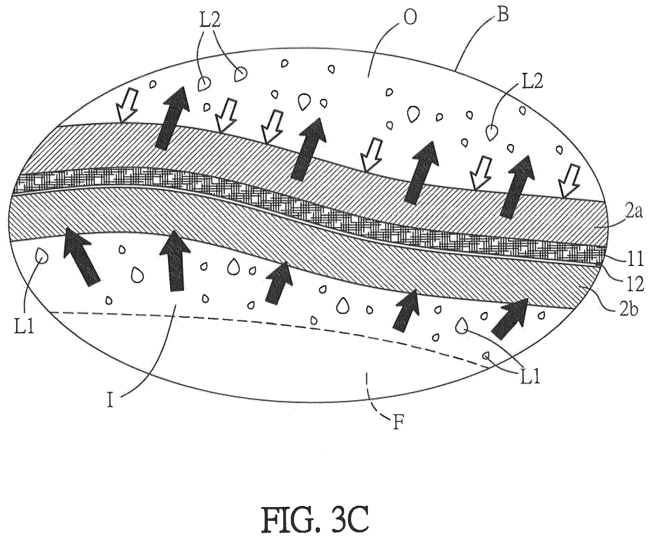

FIG. 3A is a schematic diagram showing a shoe body S made of the textile product of FIG. 2A, FIG. 3B is a sectional view along the line AA of FIG. 3A, and FIG. 3C is a partial enlarged view of a region B of the shoe body S as shown in FIG. 3B. In one example that the textile product is used to manufacture a shoe body S, the textile product is made as a shoe body S by integral sewing. The composite film 1 includes the polytetrafluoroethylene film layer 12 having good waterproof ness and the polyurethane elastic layer 11 having good elastic property and high air permeability. Accordingly, the composite film 1 can have good air permeability and waterproofness and still have a good elasticity and tensile strength. Thus, when the composite film 1 is curved to form the shoe shape, the polytetrafluoroethylene film layer 12 will not be damaged or broken and the shoe body S can still provide the waterproof function. When wearing the shoes, the second textile fabric layer 2b, which is attached to the polytetrafluoroethylene film layer 12 of the composite film 1, is closer to the skin of the human body F. In addition, the first textile fabric layer 2a is away from the skin of the human body F and is closer to the environment. Herein, the space outside the first textile fabric layer 2a is defined as an outside environment O, and the space between the second textile fabric layer 2b and the skin of the human body F is defined as an inside environment I.

The textile product of this embodiment has an air permeability and moisture permeability. In general, the human body F usually sweats and generates water vapor (containing water molecules). If the user wears the shoes made of the textile product (shoe body S), the inside environment I between the second textile fabric layer 2b and the skin of the human body F will have a higher relative humidity than the outside environment O. Accordingly, a moisture pressure difference between the inside environment I and the outside environment O, which are located at two sides of the textile product can be generated. In this case, the water molecules of the water vapor (the first fluid F1 containing water molecules) will flow from the inside environment I with higher humidity to the outside environment O. In more detailed, the water molecules can pass through the micro pores inside the polyurethane elastic layer 11 and the polytetrafluoroethylene film layer 12, thereby penetrating through the second textile fabric layer 2b, the polytetrafluoroethylene film layer 12, the polyurethane elastic layer 11 and the first textile fabric layer 2a in order along the gray arrows of the figure and reaching the outside environment O. In addition, the textile product of this embodiment also has a waterproof function. Thus, when the outside environment O contains liquid water from rain or snow (the second fluid F2 containing water molecules), the liquid water cannot pass through the micro pores of the polytetrafluoroethylene film layer 12 along the white arrows. Thus, the liquid water in the outside environment O cannot reach the inside environment I. As a result, the shoe body S containing the composite film 1 can provide a waterproof function.

The experimental examples of the composite film 1 of this embodiment will be described hereinafter. To be noted, the following description is used to describe the present disclosure in detail so those skilled in the art can realize it, but is not intended to limit the scope of the present disclosure.

### Example 1: test for tensile strength and tearing strength of composite film

In this example, the composite film is tested for obtaining the tensile strength and tearing strength thereof, and a polytetrafluoroethylene (PTFE) film is also test as the control data. This test is performed based on ASTM D5035 and ASTM D2261 standards. The unit of the test results of tensile strength is kg/inch, and the unit of the test results of tearing strength is kgf (kilogram-force). The aforementioned tensile strength and tear strength test, unless otherwise stated, are carried out in a standard test environment (temperature 21 ± 2 °C, relative humidity 65 ± 2%).

In the tensile strength test according to ASTM D5035 standard, five identical samples were prepared, and each sample was cut into strips having a width of about 25 to 50 mm and a length of about 1 to 2 inches. The samples were loaded onto a constant-rate-of-extension (CRE) tester. The stretching speed was set to 300 ± 10 mm/min, and the breaking time was controlled to be 20 ± 3 seconds. The tensile and elongation of each sample are recorded during the stretching process until the sample breaks. The average maximum tensile force per unit length recorded during the aforementioned stretching process is the tensile strength of the sample.

When performing the tearing strength test according to the ASTM D2261 standard, five identical samples were prepared, and each sample was cut into strips having a length of about 200 mm and a width of about 75 mm. A pre-cut (about 75 mm) is formed at the center of the short side of the sample and parallel to its longitudinal direction, so that the short side is cut to form two tongues. The two tongues of the sample were respectively placed and hold on the upper and lower clamps of the CRE tester, and the two clamps were separated by 75 ± 1 mm. The test speed was set to 50 ± 2 mm / min. After starting the test, the two clamps were moved to both sides to tear the sample along the pre-cut portion. The tensile and elongation of each sample during the tearing process were recorded until the sample was completely torn. The maximum average tensile force recorded during the aforementioned tearing process is the tearing strength of the sample. If there are more than five peaks in the load-extension curve, the average of the top five peaks is taken as the maximum tensile force of the test.

The results of the above tests are organized as shown in the following Table 1.

**Table 1: tests for tensile strength and tearing strength**

| Sample | tensile strength (kg/inch) | tearing strength (kgf) |
|---|---|---|
| Composite film | 1.3 to 2.0 | 2.8 to 3.1 |
| PTFE film | 0.1 to 0.2 | 0.6 to 0.7 |

As shown in the above Table 1, after the PTFE film is directly bonded to the polyurethane elastic layer to form the composite film, the tensile strength and tearing strength of the composite film are greatly improved. That is, the composite film (having a PTFE film and a polyurethane elastic layer directly bonded thereto) provided in the present embodiment has relatively good elasticity, tensile strength and impact resistance as compared with a PTFE film (control data).

### Example 2: test for waterproofness of composite film

In this example, the composite film is tested for obtaining the waterproofness thereof, and a polytetrafluoroethylene (PTFE) film is also test as the control data. This test is performed by a hydrostatic head test.

In the hydrostatic head test (refer to JIS L 1092-2009, Section 7.1.2, Method B (high water pressure test), the test sample is locked in the test disc of the test machine. The surface of the PTFE film layer faces upward, and the cloth surface of the polyurethane elastic layer contacts water. Water is poured into the disc at a fixed speed, and the pressure (water pressure) which can be withstood is tested as an indicator of waterproofness.

The results of the hydrostatic head test are listed in the following Table 2.

**Table 2: test for waterproofness**

| Sample | Waterproofness (mmH₂O) |
|---|---|
| Composite film | ≥ 10,000 |
| PTFE film | 9,000 |

After the above tests, the result of the hydrostatic head test of the composite film 1 is greater than or equal to 10,000 mmH₂O, and the result of the hydrostatic head test of the PTFE film is 9,000 mmH₂O.

### Example 3: test for air permeability of composite film

In this example, the composite film is tested for obtaining the air permeability thereof. This test is performed based on ASTM D737 standard, and another composite film containing a polytetrafluoroethylene (PTFE) film (fabricated by another company (I-life, Taiwan)) is also test for reference. The composite film (I-life) is made of a PTFE film and a hydrophilic polyurethane film layer, and the hydrophilic polyurethane film layer is not a foaming material. The unit of the test results of ASTM D737 is ft³/min/ft².

In this test (ASTM D737 standard), the composite film was cut into a sample of appropriate size, and the sample to be tested is clamped on the clamp of the tester, and the test area is about 5.93 square inches. After the test was started, the pressure differences were applied to both sides of the test sample by a pump, so that the air flowed from the high pressure area to the low pressure area through the sample. After a certain period of time, the gas volume passing through the sample was recorded to calculate the air permeability of the sample.

The results of the above test are listed in the following Table 3.

**Table 3: test for air permeability**

| Sample | air permeability (ft³/min/ft²) |
|---|---|
| Composite film | 0.244 - 0.283 |
| PTFE composite film (I-life) | 0.00 - 0.10 |

The above test results indicate that the composite film of this embodiment has an excellent air permeability.

According to the results of the above tests, the composite film of the embodiment still has a good elasticity, tensile strength and impact resistance while maintaining good air and moisture permeability and waterproofness.

In summary, since the composite film and textile product of this disclosure comprise a polytetrafluoroethylene film layer with high waterproofness and a polyurethane elastic layer with elastic property and high air permeability. Accordingly, the composite film of this disclosure can have good air permeability and waterproofness and still have a good elasticity and tensile strength. The composite film and the textile product are particularly suitable for being used as a shoe body or a clothing material for integral sewing, thereby saving the steps and materials required in the manufacturing process, reducing the manufacturing cost and the required energy, and complying with environmental protection and economic benefits.

Although the disclosure has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the disclosure.

## Claims

1. A composite film (1), comprising:
a polytetrafluoroethylene film layer (12); and
a polyurethane elastic layer (11) attached to the polytetrafluoroethylene film layer (12), wherein the polyurethane elastic layer (11) is made of elastic foam material, which is mainly composed of polyurethane, wherein the polyurethane elastic layer (11) has a thickness ranging from 0.3 mm to 1.2 mm, an average thickness of the polytetrafluoroethylene film layer (12) ranges from 0.01 mm to 0.035 mm, a plurality of non-uniform micro pores are formed inside the polyurethane elastic layer (11), and an average size of the non-uniform micro pores is ranged within 1∼150 micrometers.

2. The composite film according to claim 1, wherein a tensile strength of the composite film (1) ranges from 0.5118 kg/cm (1.3 kg/inch) to 0.7874 kg/cm (2.0 kg/inch) according to the ASTM D5035 standard.

3. The composite film according to claim 1, wherein an air permeability of the composite film (1) ranges from 0.00123952 m³/s/m² (0.244 ft³/min/ft²) to 0.00143764 m³/s/m² (0.283 ft³/min/ft²) according to the ASTM D737 standard.

4. The composite film according to claim 1, wherein a tearing strength of the composite film (1) ranges from 2.8 kgf to 3.1 kgf according to the ASTM D2261 standard.

5. The composite film according to claim 1, wherein the polyurethane elastic layer (11) is directly attached to the polytetrafluoroethylene film layer (12).

6. A textile product, comprising:
a composite film (1) comprising:
a polytetrafluoroethylene film layer (12), and
a polyurethane elastic layer (11) attached to the polytetrafluoroethylene film layer (12), wherein the polyurethane elastic layer (11) is made of elastic foam material, which is mainly composed of polyurethane, wherein the polyurethane elastic layer (11) has a thickness ranging from 0.3 mm to 1.2 mm, an average thickness of the polytetrafluoroethylene film layer (12) ranges from 0.01 mm to 0.035 mm, a plurality of non-uniform micro pores are formed inside the polyurethane elastic layer (11), and an average size of the non-uniform micro pores is ranged within 1∼150 micrometers; and
a first textile fabric layer (2, 2a, 2b) attached to the polytetrafluoroethylene film layer (12) or the polyurethane elastic layer (11) of the composite film (1).

7. The textile product according to claim 6, further comprising a second textile fabric layer (2b), wherein when the first textile fabric layer (2a) is attached to the polytetrafluoroethylene film layer (12) of the composite film (1), the second textile fabric layer (2b) is attached to the polyurethane elastic layer (11) of the composite film (1), and when the first textile fabric layer (2a) is attached to the polyurethane elastic layer (11) of the composite film (1), the second textile fabric (2b) layer is attached to the polytetrafluoroethylene film layer (12) of the composite film (1).

8. The textile product according to claim 6, wherein a tensile strength of the composite film (1) ranges from 0.5118 kg/cm (1.3 kg/inch) to 0.7874 kg/cm (2.0 kg/inch) according to the ASTM D5035 standard.

9. The textile product according to claim 6, wherein an air permeability of the composite film (1) ranges from 0.00123952 m³/s/m² (0.244 ft³/min/ft²) to 0.00143764 m³/s/m² (0.283 ft³/min/ft²) according to the ASTM D737 standard.

10. The textile product according to claim 6, wherein a tearing strength of the composite film (1) ranges from 2.8 kgf to 3.1 kgf according to the ASTM D2261 standard.

11. The textile product according to claim 6, wherein the polyurethane elastic layer (11) is directly attached to the polytetrafluoroethylene film layer (12).

## Patentansprüche

1. Ein Verbundfilm (1), der folgende Merkmale aufweist:
eine Polytetrafluorethylenfilmschicht (12); und
eine elastische Polyurethanschicht (11), die an der Polytetrafluorethylenfilmschicht (12) befestigt ist, wobei die elastische Polyurethanschicht (11) aus einem elastischen Schaumstoffmaterial hergestellt ist, das hauptsächlich aus Polyurethan gebildet ist, wobei die elastische Polyurethanschicht (11) eine Dicke aufweist, die zwischen 0,3 mm und 1,2 mm liegt, eine durchschnittliche Dicke der Polytetrafluorethylenfilmschicht (12) zwischen 0,01 mm und 0,035 mm liegt, eine Mehrzahl von nicht einheitlichen Mikroporen in der elastischen Polyurethanschicht (11) gebildet ist und eine durchschnittliche Größe der nicht einheitlichen Mikroporen zwischen 1∼150 Mikrometer liegt.

2. Der Verbundfilm gemäß Anspruch 1, bei dem eine Zugfestigkeit des Verbundfilms (1) gemäß dem ASTM-Standard D5035 zwischen 0,5118 kg/cm (1,3 kg/Zoll) und 0,7874 kg/cm (2,0 kg/Zoll) liegt.

3. Der Verbundfilm gemäß Anspruch 1, bei dem eine Luftdurchlässigkeit des Verbundfilms (1) gemäß dem ASTM-Standard D737 zwischen 0,00123952 m³/s/m² (0,244 ft³/min/ft²) und 0,00143764 m³/s/m² (0,283 ft³/min/ft²) liegt.

4. Der Verbundfilm gemäß Anspruch 1, bei dem eine Reißfestigkeit des Verbundfilms (1) gemäß dem ASTM-Standard D2261 zwischen 2,8 kgf und 3,1 kgf liegt.

5. Der Verbundfilm gemäß Anspruch 1, bei dem die elastische Polyurethanschicht (11) direkt an der Polytetrafluorethylenfilmschicht (12) befestigt ist.

6. Ein Textilprodukt, das folgende Merkmale aufweist:
einen Verbundfilm (1), der folgende Merkmale aufweist:
eine Polytetrafluorethylenfilmschicht (12) und
eine elastische Polyurethanschicht (11), die an der Polytetrafluorethylenfilmschicht (12) befestigt ist, wobei die elastische Polyurethanschicht (11) aus einem elastischen Schaumstoffmaterial hergestellt ist, das hauptsächlich aus Polyurethan gebildet ist, wobei die elastische Polyurethanschicht (11) eine Dicke aufweist, die zwischen 0,3 mm und 1,2 mm liegt, eine durchschnittliche Dicke der Polytetrafluorethylenfilmschicht (12) zwischen 0,01 mm und 0,035 mm liegt, eine Mehrzahl von nicht einheitlichen Mikroporen in der elastischen Polyurethanschicht (11) gebildet ist und eine durchschnittliche Größe der nicht einheitlichen Mikroporen zwischen 1∼150 Mikrometer liegt; und
eine erste Textilgewebeschicht (2, 2a, 2b), die an der Polytetrafluorethylenfilmschicht (12) oder der elastischen Polyurethanschicht (11) des Verbundfilms (1) befestigt ist.

7. Das Textilprodukt gemäß Anspruch 6, das ferner eine zweite Textilgewebeschicht (2b) aufweist, wobei die zweite Textilgewebeschicht (2b), wenn die erste Textilgewebeschicht (2a) an der Polytetrafluorethylenfilmschicht (12) des Verbundfilms (1) befestigt ist, an der elastischen Polyurethanschicht (11) des Verbundfilms (1) befestigt ist, und wobei die zweite Textilgewebeschicht (2b), wenn die erste Textilgewebeschicht (2a) an der elastischen Polyurethanschicht (11) des Verbundfilms (1) befestigt ist, an der Polytetrafluorethylenfilmschicht (12) des Verbundfilms (1) befestigt ist.

8. Das Textilprodukt gemäß Anspruch 6, bei dem eine Zugfestigkeit des Verbundfilms (1) gemäß dem ASTM-Standard D5035 zwischen 0,5118 kg/cm (1,3 kg/Zoll) und 0,7874 kg/cm (2,0 kg/Zoll) liegt.

9. Das Textilprodukt gemäß Anspruch 6, bei dem eine Luftdurchlässigkeit des Verbundfilms (1) gemäß dem ASTM-Standard D737 zwischen 0,00123952 m³/s/m² (0,244 ft³/min/ft²) und 0,00143764 m³/s/m² (0,283 ft³/min/ft²) liegt.

10. Das Textilprodukt gemäß Anspruch 6, bei dem eine Reißfestigkeit des Verbundfilms (1) gemäß dem ASTM-Standard D2261 zwischen 2,8 kgf und 3,1 kgf liegt.

11. Das Textilprodukt gemäß Anspruch 6, bei dem die elastische Polyurethanschicht (11) direkt an der Polytetrafluorethylenfilmschicht (12) befestigt ist.

## Revendications

1. Film composite (1), comprenant:
une couche de film de polytétrafluoroéthylène (12); et
une couche élastique de polyuréthane (11) fixée à la couche de film de polytétrafluoroéthylène (12), où la couche élastique de polyuréthane (11) est réalisée en un matériau expansé élastique qui est composé principalement de polyuréthane, où la couche élastique de polyuréthane (11) présente une épaisseur qui se situe dans la plage de 0,3 mm à 1,2 mm, une épaisseur moyenne de la couche de film de polytétrafluoroéthylène (12) se situe dans la plage de 0,01 mm à 0,035 mm, une pluralité de micropores non uniformes sont formés à l'intérieur de la couche élastique de polyuréthane (11), et une grandeur moyenne des micropores non uniformes se situe dans la plage de 1∼150 micromètres.

2. Film composite selon la revendication 1, dans lequel une résistance à la traction du film composite (1) se situe dans la plage de 0,5118 kg/cm (1,3 kg/pouce) à 0,7874 kg/cm (2,0 kg/pouce) selon la norme ASTM D5035.

3. Film composite selon la revendication 1, dans lequel une perméabilité à l'air du film composite (1) se situe dans la plage de 0,00123952 m³/s/m² (0,244 pied³/min/pied²) à 0,00143764 m³/s/m² (0,283 pied³/min/pied²) selon la norme ASTM D737.

4. Film composite selon la revendication 1, dans lequel une résistance à la déchirure du film composite (1) se situe dans la plage de 2,8 kgf à 3,1 kgf selon la norme ASTM D2261.

5. Film composite selon la revendication 1, dans lequel la couche élastique de polyuréthanne (11) est fixée directement à la couche de film de polytétrafluoroéthylène (12).

6. Produit textile, comprenant:
un film composite (1) comprenant:
une couche de film de polytétrafluoroéthylène (12), et
une couche élastique de polyuréthane (11) fixée à la couche de film de polytétrafluoroéthylène (12), où la couche élastique de polyuréthane (11) est réalisée en un matériau expansé élastique qui est composé principalement de polyuréthane, où la couche élastique de polyuréthane (11) présente une épaisseur qui se situe dans la plage de 0,3 mm à 1,2 mm, une épaisseur moyenne de la couche de film de polytétrafluoroéthylène (12) se situe dans la plage de 0,01 mm à 0,035 mm, une pluralité de micropores non uniformes sont formés à l'intérieur de la couche élastique de polyuréthane (11), et une grandeur moyenne des micropores non uniformes se situe dans la plage de 1∼150 micromètres; et
une première couche de tissu textile (2, 2a, 2b) fixée à la couche de film de polytétrafluoroéthylène (12) ou à la couche élastique de polyuréthane (11) du film composite (1).

7. Produit textile selon la revendication 6, comprenant par ailleurs une deuxième couche de tissu textile (2b), dans lequel, lorsque la première couche de tissu textile (2a) est fixée à la couche de film de polytétrafluoroéthylène (12) du film composite (1), la deuxième couche de tissu textile (2b) est fixée à la couche élastique de polyuréthane (11) du film composite (1) et, lorsque la première couche de tissu textile (2a) est fixée à la couche élastique de polyuréthane (11) du film composite (1), la deuxième couche de tissu textile (2b) est fixée à la couche de film de polytétrafluoroéthylène (12) du film composite (1).

8. Produit textile selon la revendication 6, dans lequel une résistance à la traction du film composite (1) se situe dans la plage de 0,5118 kg/cm (1,3 kg/pouce) à 0,7874 kg/cm (2,0 kg/pouce) selon la norme ASTM D5035.

9. Produit textile selon la revendication 6, dans lequel la perméabilité à l'air du film composite (1) se situe dans la plage de 0,00123952 m³/s/m² (0,244 pied³/min/pied²) à 0,00143764 m³/s/m² (0,283 pied³/min/pied²) selon la norme ASTM D737.

10. Produit textile selon la revendication 6, dans lequel une résistance à la déchirure du film composite (1) se situe dans la plage de 2,8 kgf à 3,1 kgf selon la norme ASTM D2261.

11. Produit textile selon la revendication 6, dans lequel la couche élastique de polyuréthanne (11) est fixée directement à la couche de film de polytétrafluoroéthylène (12).
